# EUROPEAN PATENT APPLICATION

(11) **EP 4 378 308 A2**
(43) Date of publication of application: **05.06.2024**
(21) Application number: 23212874.4
(22) Date of filing: 29.11.2023
(51) Int. Cl.: A01K 61/95, A22C 25/12

(54) **ACTIVE BACK/ABDOMEN ORIENTATION UNIT FOR ANESTHETIZED FISH AND SYSTEM FOR AUTOMATED VACCINATION OF ANESTHETIZED FISH COMPRISING THE SAME**

(30) Priority: 02.12.2022 NO 20221295
(71) Applicant: Maskon AS, 7502 Stjørdal (NO)
(72) Inventor: Hammeren, Jon Egil, 7630 Aasen (NO); Vaagland, Frode, 7530 Meraaker (NO); Skaatun, Knut, 7068 Trondheim (NO); Störseth, Roger, 7517 Hell (NO); Eriksson, John, 7530 Meraaker (NO)
(74) Representative: Curo AS

(57) **Abstract**

Active back/abdomen orientation unit (100) for anesthetized fish and system for automated vaccinating anesthetized fish comprising the same, ensuring that fish to be vaccinated is oriented in a confirmed back/abdomen orientation.

## Description

The present invention is related to an active back/abdomen orientation unit for orienting anesthetized (alive) fish, according to the preamble of claim 1.

The present invention is also related to a system for automated vaccination of anesthetized (alive) fish comprising an active back/abdomen orientation unit, according to the preamble of claim 6.

### Background

Presently there has been an increasing focus on automated solutions for vaccination and sorting prior to or after vaccination of anesthetized (alive) fish, and especially automated solutions ensuring that the fish welfare is maintained.

The closest prior art to the present invention is found in NO 331843 B1, in the name of the applicant. In NO 331843 B1 is described a method and system for recognizing, vaccinating, sorting and documenting anesthetized (alive) fish. The system includes a control unit, means for acquiring information about fish, transportation means to transport fish past means for acquiring information about fish, and means for vaccinating the individual fish. The system is arranged for detecting/recognizing different parameters of the individual fish as input for sorting fish to sort out unwanted fish prior to vaccination, instruct means for vaccinating fish, and instructing means for sorting fish after vaccination or sorting out untreated fish. It is also described that the system may include means for orienting the fish in desired back/abdomen direction in different positions in the system. However, these means are only described as a passive abdomen turner.

A drawback of this solution is, among others, that it requires that the supplied fish is singularized and that the fish is supplied in a correct position as regards head first, requiring a separate unit for this in front of the transportation means. Even though it is described means for orienting the fish to be vaccinated in a desired back/abdomen direction, there is no disclosure of an active orientation of the fish, only that the fish is oriented, which could result in that the fish supplied to the vaccination unit is wrongly oriented as regards back/abdomen and cannot be vaccinated.

There further exist some attempts to provide back/abdomen orientation units that commonly are formed by inclined bodies that the fish is sliding down on, which in addition is shaped to orient the fish in an upright position. Other solutions use transport belts (US5115903 A), retaining members (SU1752309 A1, EP0734653 A1, WO10081708 A1, EP3000325 A1) or similar to orient the fish in a desired back or abdomen position. In e.g. US2020120944 AA there is used a combination of guide rollers and channel shape for the same.

From WO 2012/008843 A1 is known a method and system for recognizing, vaccinating, sorting and documenting anesthetized (alive) fish. The system may include means for orienting the fish in desired back/abdomen direction in different positions in the system.

In EP 0548383 A1 is described a machine and method for aligning fish and orienting them in the same direction in single file.

From US 3348260 A is known a method for orientating fish.

Drawbacks of the mentioned back/abdomen orientation solutions are that they either are passive orientation units with uncertain result or that they exert physical force on the fish to achieve the back/abdomen orientation, resulting in stress for the fish.

It is accordingly a need for an active back/abdomen orientation unit for anesthetized fish and a system for automated vaccination of anesthetized fish comprising the same handling the fish in an active and gentle manner in connection with back/abdomen orientation.

It is further a need for an active back/abdomen orientation unit for anesthetized fish and a system for automated vaccination of anesthetized fish guaranteeing the back/abdomen orientation of anesthetized fish before vaccination.

It is further a need for an active back/abdomen orientation unit and a system for automated vaccination of anesthetized fish that is less space demanding than prior art solutions comprising a back/abdomen orientation solution.

### Object

The main object of the present invention is to provide an active back/abdomen orientation unit for anesthetized fish and a system for automated vaccination of anesthetized fish comprising the same, partly or entirely solving the disadvantages of prior art.

It is further an object of the present invention to provide an active back/abdomen orientation unit for anesthetized fish and system for automated vaccination of anesthetized fish comprising the same, enabling gentle and ethic orientation of anesthetized fish, in the back or abdomen direction.

An object of the present invention is to provide an active back/abdomen orientation unit for anesthetized fish and a system for automated vaccination of anesthetized fish comprising the same, being scalable in relation to the amount of fish to be vaccinated.

A further object of the present invention is to provide an active back/abdomen orientation unit for anesthetized fish and a system for automated vaccination of anesthetized fish comprising the same, ensuring confirmed/guaranteed back/abdomen orientation of the anesthetized fish for vaccination.

It is an object of the present invention to provide an active back/abdomen orientation unit for anesthetized fish and a system for automated vaccination of anesthetized fish comprising the same providing accurate and effective and fully automatic, i.e. without manual intervention, vaccination of anesthetized fish, providing gentle and ethic vaccination of fish.

An object of the present invention is to provide an active back/abdomen orientation unit and system for automated vaccination of anesthetized fish comprising the same, also enabling sorting of vaccinated or unvaccinated anesthetized fish in an accurate and effective and fully automatic manner, i.e. without manual intervention, providing gentle and ethic handling of the fish.

An object of the present invention is to provide an active back/abdomen orientation unit and a system for automated vaccination of anesthetized fish comprising the same, being compact and space saving compared to prior art solutions.

It is an object of the present invention to provide a system for automated vaccination (and sorting) of anesthetized fish comprising at least one active back/abdomen orientation unit that in addition is able to document the fish, e.g. from fork length, height, injuries, cuts, gender, biomass etc.

It is further an object of the present invention to provide a system for automated vaccination (and sorting) of anesthetized fish comprising at least one active back/abdomen orientation unit that in addition can be arranged for marking of fish, sampling of fish or recognition of fish.

Further objects of the present invention will appear from the following description, claims and attached drawings.

### The invention

An active back/abdomen orientation unit for anesthetized fish according to the present invention is defined by the technical features of claim 1. Preferable features of the active back/abdomen orientation unit are described in the dependent claims.

A system for automated vaccination of anesthetized fish according to the present invention is defined by the technical features of claim 6. Preferable features of the system are described in the dependent claims.

An active back/abdomen orientation unit (ABAOU) for anesthetized fish according to the present invention comprises a rotating back/abdomen orientation assembly. The rotating back/abdomen orientation assembly according to the present invention comprises first and second rotating orientation members arranged about a common rotation axis and independently rotatable about the common rotation axis, wherein at least one receiving space for fish to be actively back/abdomen oriented is formed by structure members of the first and second rotating orientation members.

In accordance with one embodiment of the ABAOU according to the present invention, the first and second rotating orientation members comprise a number of respective longitudinally extending structure members arranged perpendicularly to a respective disc at one end thereof and distributed in circumferential direction of the respective disc. In accordance with one embodiment of the ABAOU according to the present invention, the first and second rotating members are arranged laterally inversed to the common rotation axis without the structure members of the respective rotating orientation members being in contact with the respective disc of the other rotating orientation member. In this manner the rotating orientating members can be rotated independently of the other.

In accordance with one embodiment of the ABAOU according to the present invention, the mentioned structure members of the first and second rotating orientation member are arranged alternating about the common rotation axis such that adjoining structure members of the rotating orientation members form the at least one receiving space.

According to one embodiment of the ABAOU according to the present invention, the ABAOU comprises an independently controllable rotating feeder member arranged upstream the mentioned rotating back/abdomen orientation assembly, wherein the rotating feeder member comprises at least one receiving space for receiving an anesthetized fish and controlled feeding of the received fish to the rotating back/abdomen orientation assembly.

In accordance with one embodiment of the ABAOU according to the present invention, the rotating feeder member comprises a number of structure members arranged to respective discs at ends thereof and distributed in circumferential direction thereof.

According to one embodiment of the ABAOU according to the present invention, the rotating feeder member and rotating back/abdomen orientation assembly are arranged to a support structure with parallel rotation axes, wherein the rotation axis of the rotating feeder member is at an elevated plane in relation to the common rotation axis of the rotating back/abdomen orientation assembly.

Accordingly, by the ABAOU is provided a solution where one always will have a desired confirmed back/abdomen orientation of fish handled by the ABAOU, such that the fish can be supplied to a downstream vaccination unit with an ensured back/abdomen orientation increasing the accuracy of the vaccination procedure.

The present invention is also related to a system for automated vaccination of anesthetized fish comprising at least one ABAOU according to the present invention. A system for automated vaccination according to the present invention comprises at least one transport unit for transport of fish past at least one detection unit acquiring information about each transported fish, and at least one vaccination unit, and wherein the at least one ABAOU arranged upstream the vaccination unit supplying the vaccination unit with fish with a confirmed desired back/abdomen orientation.

According to one embodiment of the system according to the present invention, the system comprises a first transport unit configured to receive anesthetized fish at one end thereof, and a second transport unit arranged in a parallel longitudinal plane and wherein the first and second transport unit partly overlap at the second end of the first transport unit, and wherein the at least one ABAOU is arranged downstream the second transport unit.

In accordance with one embodiment of the system according to the present invention, at least one detection unit is associated with each of the transport units to acquire information of fish transported on the respective transport unit.

According to one embodiment of the system according to the present invention, the system comprises an initial orientation unit configured to move fish from the first transport unit to the second transport unit as well as orienting the moved fish with its longitudinal direction in transversal direction of the second transport unit with the head/nose in a desired direction.

The system according to the present invention further comprises the different embodiments of the ABAOU described above.

The system according to the present invention is in a further embodiment according to the present invention provided with a sorting unit downstream the vaccination unit to sort fish after vaccination, as well as sorting unvaccinated fish or sorting out unwanted fish not to be vaccinated.

In a further embodiment of the system according to the present invention, the initial orientation unit is further configured to sort out unwanted fish not to be vaccinated.

The vaccination unit according to the present invention can be arranged for single vaccination or poly-vaccination, e.g., in abdomen in a defined injection point, or muscular vaccination.

The system according to the present invention is thus configured for recognition/detection, head/nose orientation, back/abdomen orientation, vaccination, sorting (if desired) and documentation of fish.

In addition to the points and actions mentioned above, the system in a further embodiment is arranged to be coordinated against the origin of the fish. With this is meant from which fish container, batch, etc., the fish was supplied to the system according to the invention, and thus complete documentation of the individual fish be can achieved.

The system works in the way that anesthetized fish is fed to the first transport unit.

Then the fish is transported by the first transport unit past the at least one detection unit associated with the first transport unit that at least detects the orientation of the fish, but may also detect/recognize other parameters of the individual fish.

While the fish is being transported by the first transport unit, said first transport unit preferably being in a continuous motion at a constant speed, past the at least one detection unit, information (each image) about each fish is analyzed and sent to a control unit, which is configured to control the initial orientation unit and the retaining device thereof.

Based on the evaluation/analysis, the control unit controls/instructs the initial orientation unit and the retaining device thereof with desired settings. Based on the settings, the initial orientation unit is controlled to position the retaining device thereof in the vicinity of a desired fish on the first transport unit, followed by activation of the retaining device. After the fish is retained to the initial orientation unit, the initial orientation unit moves the retained fish from the first transport unit to the second transport unit at the same time as the retained fish is oriented with the longitudinal direction in transversal direction of the second transport unit, and with the head/nose in a desired direction thereof. The initial orientation unit next releases the fish and returns to the first transport unit for repeating the same with another fish.

The fish transported by the second transport unit is transported past the at least one detection unit associated with the second transport unit that at least detects the orientation of the fish, as well as detects/recognizes other parameters of the individual fish relevant for determining vaccination settings of the vaccination unit.

While fish is being transported by the second transport unit, said second transport unit preferably being in a continuous motion at a constant speed, past the at least one detection unit, information (each image) about each fish is analyzed and sent to the control unit, which is configured to control the ABAOU downstream the second transport unit, as well as the vaccination unit.

By means of the information from the at least one detection unit associated with the second transport unit, each fish is analyzed to find back/abdomen orientation on the second transport unit, and further analyzing the fish based, e.g., fork length and height of the fish, alternatively also thickness of the fish. Moreover, the system/control unit can be arranged to detect or evaluate any injuries, such as gill cover, humpback, pinching injuries etc. Moreover, the system/control unit can be arranged to detect the gender of the fish.

Based on the evaluation/analysis of the back/abdomen orientation of the respective fish, the control unit controls/instructs the ABAOU to orient the respective fish in a desired back/abdomen orientation and is supplying it to the vaccination unit with the desired back/abdomen orientation. It also comprises controlling the feeder member, if present, to ensure an even supply of back/abdomen oriented fish to the vaccination unit.

Based on the evaluation/analysis of the respective fish transported by the second transport unit, the control unit controls/instructs the vaccination unit, i.e. retaining device and injection unit thereof with desired settings. Settings for optimal injection point and optimal injection depth for vaccination of the respective fish, including suitable dosage quantity, is sent to the vaccination unit, as well as activation of the retaining device.

If the system further comprises a sorting unit downstream the vaccination unit, the control unit is configured to provide the sorting unit with sorting instructions, such that when the vaccination has been performed, the fish is sorted to a correct sorting line, receiving container or similar.

If the analysis result is that no vaccination is to be performed, e.g., due to injuries or similar on the fish or non-detectable fish, the fish is passed through the ABAOU and vaccination unit and is sorted out to a correct sorting line, receiving container or similar by the sorting unit.

If the at least one detection unit associated with the first transport unit is provided with the same detection capabilities as described above for the at least one detection unit associated with the second transport unit, the mentioned initial orientation unit in addition may be configured/controlled to sort unwanted fish to a sorting line, receiving container or similar instead of moving it to the second transport unit. A fish that is not to be vaccinated will thus not have to pass through the system with this embodiment.

Information/data being generated by the system preferably also provides information about biomass (theoretical weight) of the fish batch being vaccinated, preferably also including injures etc. in percentages.

The theoretical weight, i.e. the biomass, is a calculation based on fork length and height of the fish, but thickness of the fish can also be a relevant parameter.

Accordingly, by the initial orientation device being movable in several directions in relation to the first transport unit and that the retaining device thereof is movable by a rotational interface, this results in that the system according to the present invention does not require a strict control of the supply of fish to the first transport unit, i.e. it does not require that the fish is singularized and/or in a specific head/tail fin orientation, which is the case with the most prior art solutions.

In accordance with a further embodiment of the present invention, the system according to the present invention comprises at least one detection unit configured to acquire information of fish present in the ABAOU. The at least one detection unit is configured to detect the fish after it has been turned by the feeder member enabling inspection of the fish from the other side than inspected by the at least one detection unit associated with the second transport unit. Accordingly, enabling a confirmed inspection of both sides of the respective fish.

The ABAOU according to the present invention ensures that every fish is vaccinated (and sorted) separately, as well as ensures that the respective fish always is supplied to the vaccination unit with a desired back/abdomen direction ready for engagement (retainment) and vaccination.

The sorting unit, sorting lines, receiving containers or similar are, e.g., as described in NO 331843 B1 or NO 343355 B1, both in the name of the applicant, and the content of both is included herein by reference. E.g., there are arranged one or more sorting channels or containers, where for example one sorting channel or container is for fish of one given size, another sorting channel or container is for fish of another given size etc., and for example one sorting channel or container for non-vaccinated fish, i.e. for example fish that has been sorted out because of injuries or similar.

Accordingly, with the present invention there is provided an ABAOU that increases the accuracy of the vaccination unit by ensuring that the respective fish supplied to the vaccination unit always is in a preferred back/abdomen direction.

By the present invention is provided a compact and efficient system for vaccination, as only short transport units are required. The system according to the present invention will thus be less space-demanding than the prior known solutions.

Further, the time the fish will have to be in the system is limited due to the compact system where it will be short time between the fish is supplied to the first transport unit until it has been vaccinated by the vaccination unit and possibly sorted.

A further advantage of the present invention a more gentle and fewer handling of the fish, as well as less mechanical stress of the fish, compared to prior art solutions.

By enabling confirmed two-side inspection of the fish, i.e. both sides of the fish, improved and detailed acquiring of information of the respective fish is achieved, that will be beneficial both for the settings of the vaccination unit and for the documentation, as discussed above.

Further details and advantageous features of the invention will appear from the following example description.

### Example

The present invention will below be described in more detail with references to the attached drawings, where
Figures 1a-f are principle drawings of an active back/abdomen orientation unit for anesthetized fish according to the invention,
Figures 2a-b are principle drawings of a system for automated vaccination of anesthetized fish according to the present invention, and
Figure 3 is a block diagram of a system according to the present invention.

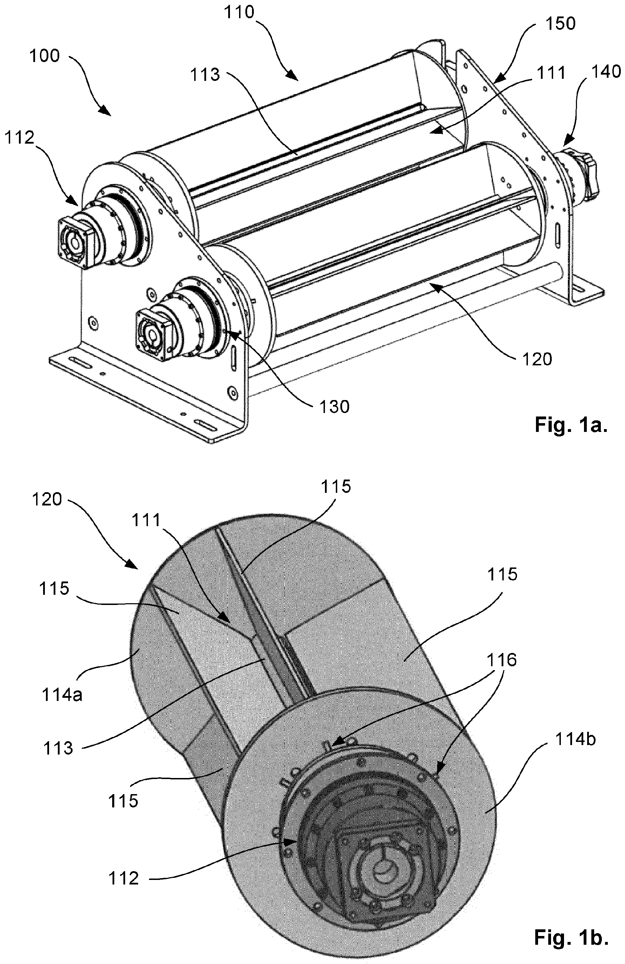

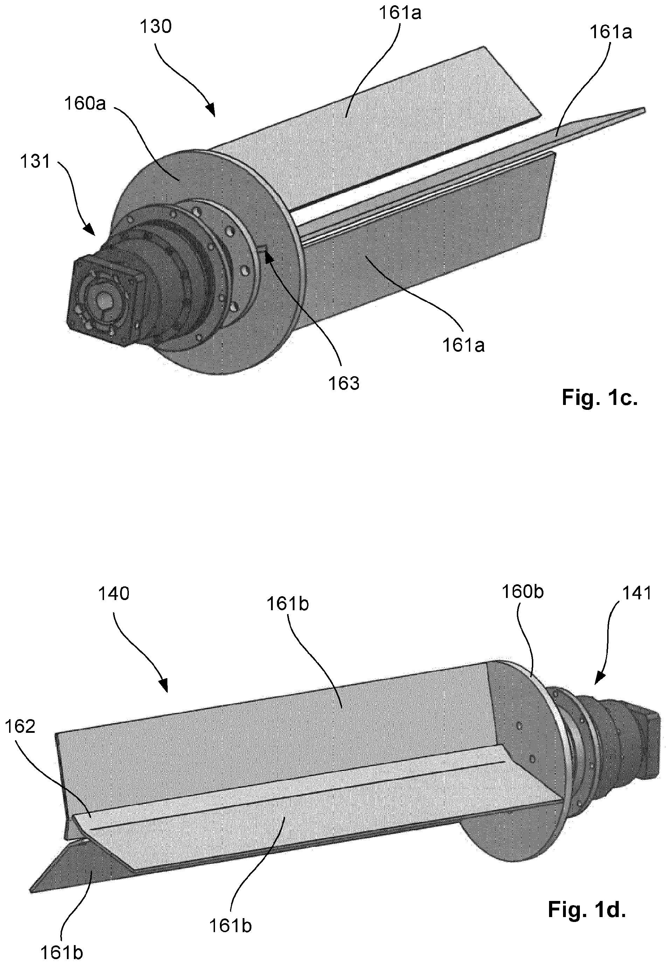

Reference is now made to Figures 1a-f showing principle drawings of an active back/abdomen orientation unit (ABAOU) 100 for anesthetized fish according to the present invention.

The ABAOU 100 according to one embodiment of the present invention comprises a rotating back/abdomen orientation assembly 120 comprising a first rotating orientation member 130 and a second rotating orientation member 140, wherein the first 130 and second 140 rotating orientation members are arranged about a common rotation axis, and independently rotatable by means of associated controllable drive units 131, 141, such as, e.g. electric motors.

Details of the mentioned back/abdomen orientation assembly 120 will now be described in further detail with reference to Figures 1c-f. The first 130 and second 140 rotating orientation members comprise respective discs 160a-b and a number of longitudinally extending structure members 161a-b, respectively, such as rectangular plates, extending in a plane perpendicular from the respective disc 160a-b and attached to the respective disc 160a-b at one end thereof. In the shown embodiment there are arranged three respective structure members 161a-b distributed in circumferential direction of the respective disc 160a-b, i.e. with approximately 120 degrees between them in the shown embodiment.

The mentioned structure members 161a of the first rotating orientation member 130 extend perpendicularly from the mentioned disc 160a with a height corresponding to the outer circumference of the mentioned disc 160a at outer side and towards the rotational center axis extending through the center of the mentioned disc 160a and ends at inner side with a desired spacing from the mentioned rotational center axis.

The mentioned structure members 161b of the second rotating orientation member 140 extend perpendicularly from the mentioned disc 160b with a height corresponding to the outer circumference of the mentioned disc 160b at outer side and towards the rotational center axis extending through the center of the mentioned disc 160a and ends at inner side in a deflecting part 162, deflecting away from the mentioned rotational axis with a desired angle.

The mentioned discs 160a-b are e.g. provided with a number of slots 163 located in a pattern and adapted to receive and accommodate a connection flange (not shown) of the ends of respective structure members 161a-b, such that the mentioned structure members 161a-b are locked in a desired pattern to the respective disc 160a-b.

The mentioned first 130 and second 140 rotating orientation members are arranged laterally inversed to the common rotation axis without the structure members 161a-b of the respective rotating orientation member 130, 140 being in contact with the respective disc 160a-b of the other rotating orientation member 130, 140. The structure members 161a-b are further arranged alternating about the common rotation axis and in this manner receiving spaces 170 are formed by adjoining structure members 161a-b of the respective rotating orientation members 130, 140. The mentioned rotating orientation members 130 and 140 are independently rotatable about the common rotation axis by means of the mentioned respective drive units 131 and 141 to enable active back/abdomen orientation of the fish to a desired orientation.

Accordingly, by that the mentioned first 130 and second 140 rotating orientation members each comprise three structure members 161a-b, there are formed three receiving spaces 170 in the rotating back/abdomen orientation assembly 120.

In accordance with a further embodiment of the present invention, the ABAOU 100 further comprises a rotating feeder member 110, as shown in further detail in 1b, arranged upstream the mentioned rotating back/abdomen orientation assembly 120. In accordance with one embodiment of the ABAOU 100 according to the present invention, the rotating feeder member 110 and rotating back/abdomen orientation assembly 120 are arranged to a support structure 150 (Fig. 1a) with parallel rotation axes, wherein the rotation axis of the rotating feeder member 110 in addition is at an elevated plane in relation to the common rotation axis of the rotating back/abdomen orientation assembly 120. The rotating feeder member 110 is independent controllable via a drive unit 112, such, as e.g., an electric motor.

The rotating feeder member 110 according to the present invention comprises at least one receiving space 111 for receiving an anesthetized fish for back/abdomen orientation by the rotating back/abdomen orientation assembly 120.

The rotating feeder member 110, as shown in further detail in Figure 1b, comprises a rotatory axle 113 and two discs 114a-b spaced apart in longitudinal direction of the rotary axle 113 and attached thereto. The rotating feeder member 110 further comprises a number of longitudinally extending structure members 115, such as rectangular plates, extending in a plane perpendicular to the mentioned discs 114a-b, wherein the structure members 115 are arranged in pairs to form at least one receiving space 111 for anesthetized fish to be back/abdomen oriented by the rotating back/abdomen orientation assembly 120, as described above. In the shown embodiment there are provided three receiving spaces 111, distributed in circumferential direction of the mentioned discs 114a-b.

The mentioned longitudinally extending structure members 115 extend between the mentioned discs 114a-b with a height corresponding to the outer circumference of the mentioned discs 114a-b at outer side and towards the mentioned rotary axle 113 and ends at inner side at the mentioned rotary axle 113.

The mentioned discs 114a-b are further provided with a number of slots 116, located in a pattern and adapted to receive and accommodate a connection flange (not shown) of the respective ends of the respective structure members 115, such that the mentioned structure members 115 are locked in place between the mentioned discs 114a-b when these are arranged to the rotary axle 113 to form the desired number of receiving spaces 111 around the rotary axle 113.

The described rotating feeder member 110 is rotated to ensure a controlled (even tempo) feeding of anesthetized fish to the rotating back/abdomen orientation assembly 120.

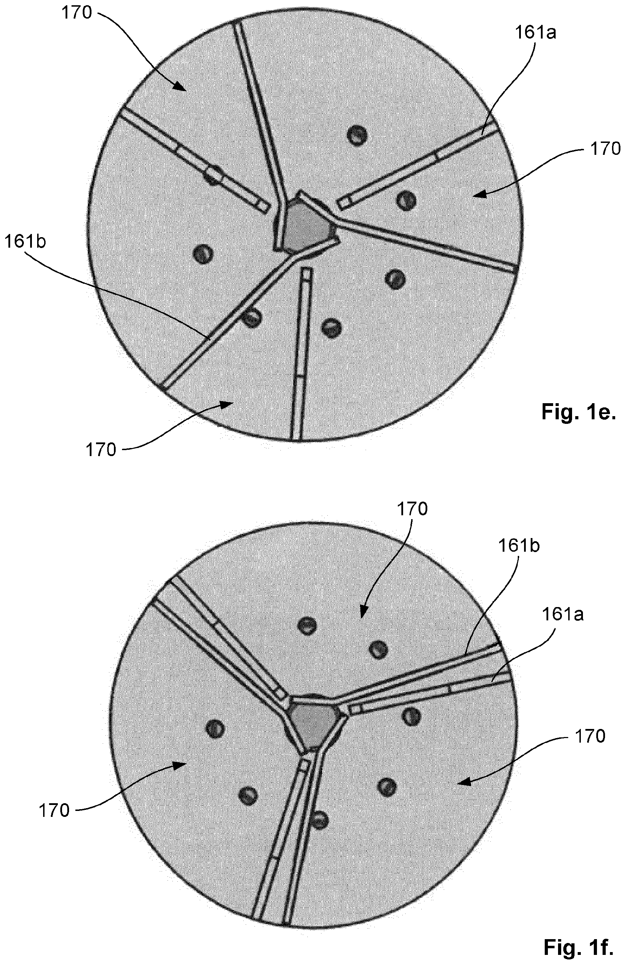

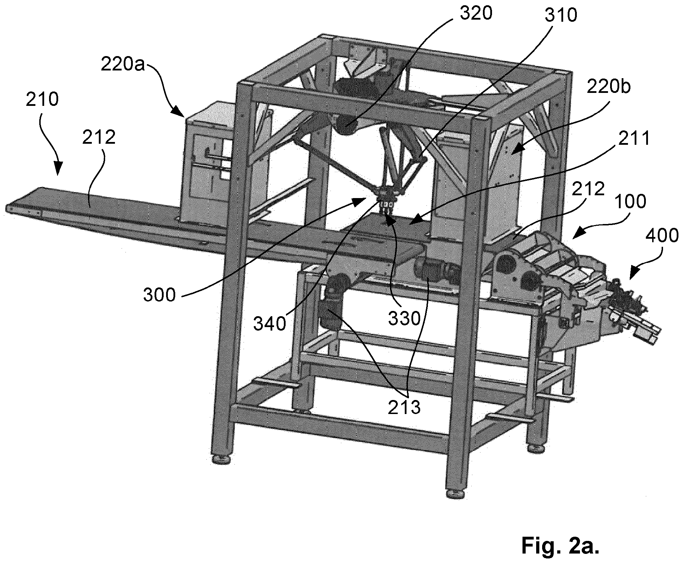

The rotating feeder member 110 and the rotating back/abdomen orientation assembly 120 are controlled such that the rotating back/abdomen orientation assembly 120 in a receiving space 170 thereof receives fish from a receiving space 111 of the rotating feeder member 110. The rotating back/abdomen orientation assembly 120 is configured/controlled to perform an active back/abdomen orientation of the received fish. If the received fish lies in a correct back/abdomen orientation, both the first 130 and second 140 rotating orientation members are rotated together (as shown in Fig. 1e) and the received fish is forwarded/supplied to a vaccination unit 400, see Figures 2a-b, for vaccination. If the received fish is incorrectly back/abdomen oriented, the second rotating orientation member 140 is rotated while the first rotating orientation member 130 is retained (as shown in Fig. 1f), resulting in that the fish is tilted/turned over to correct back/abdomen orientation and is forwarded/supplied to a vaccination unit 400, see Figures 2a-b, for vaccination.

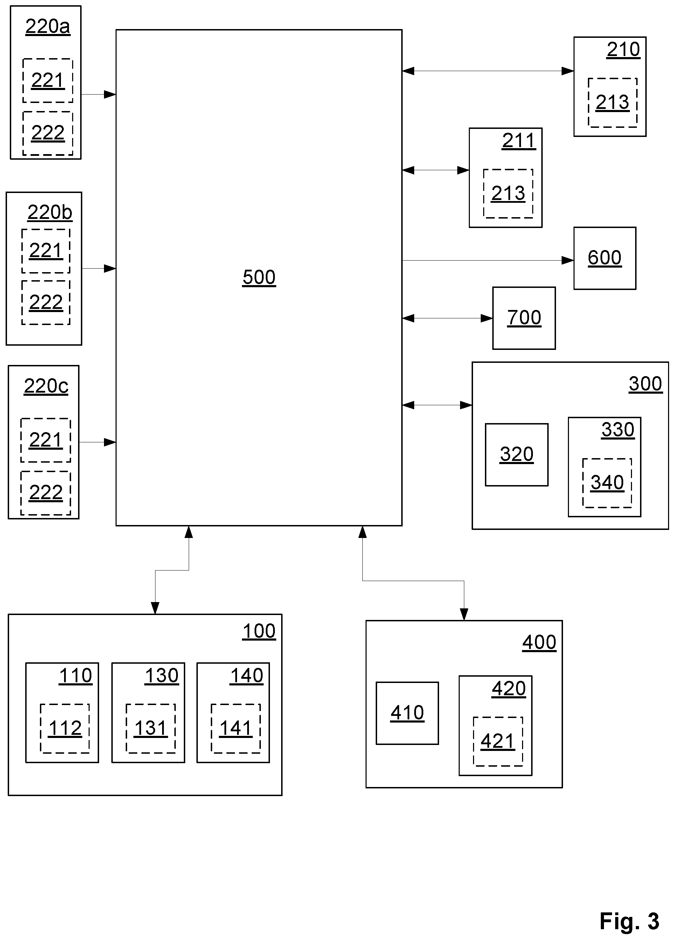

Reference is now made to Figures 2a-b illustrating principle drawings of a system for automated vaccination of anesthetized fish according to the present invention and Figure 3 which is a block diagram of a system according to the present invention.

The system for automated vaccination according to the present invention comprises a first transport unit 210 configured to receive anesthetized fish from a supply unit/system (not shown) at one end thereof, and a second transport unit 211 arranged in a parallel longitudinal plane and wherein the first 210 and second 211 transport units partly overlap at the second end of the first transport unit 210. The second transport unit 211 is configured to supply anesthetized fish to the ABAOU 100 arranged downstream/at rear end thereof, i.e. supplying fish to the rotating feeder member 110, if present, or rotating back/abdomen assembly 120. The system further comprises detection units 220a-b, wherein at least one detection unit 220a-b is associated with each of the first 210 and second 211 transport unit.

The first 210 and second 211 transport unit are, e.g., formed by one or more endless conveyer belts 212 driven by a controllable drive unit 213, such as an electric motor.

The detection units 220a-b are, e.g., formed by at least one camera 221 (see Fig. 3) and at least one illumination source 222 (see Fig. 3). The illumination source 222 can e.g. be a laser line generator and the camera 221 can be a 2D or 3D camera or consist of several cameras 221.

The illumination source 222 is preferably arranged mainly perpendicularly to the respective transport unit 210, 211 (conveyer belt 212), at a given distance above the respective transport unit (conveyer belt 212), and is arranged in front of an initial orientation unit 300, further described below.

After the at least one illumination source 222, seen in longitudinal direction of the respective transport unit 210, 211 (conveyer belt 212), the at least one camera 221 is arranged, preferably at the same height above the respective transport unit 210, 211 (conveyer belt 212) as the at least one illumination source 222, such that the at least one camera 221 forms an angle against a laser line generated by the at least one illumination source 222, which laser line is used to provide the at least one camera 221 with a constant reference. This imaging method provides a 3D-measurement of a passing fish, i.e. a form of orthographical map.

The orthographical map resulting from the at least one detection unit 220a associated with the first transport unit 210 is used to find border lines of the fish or several fish adjacent to each other to determine if several fishes are positioned next to each other, touching each other or partly overlapping. The at least one detection unit 220a is further configured to detect and document the orientation of the respective fish on the first transport unit 210, which will be used to control the initial orientation unit 300, further described below.

The at least one detection unit 220b associated with the second transport unit 220b provides an orthographical map enabling determination of the most optimal injection point for vaccination based on the geometry of the fish in three dimensions, length, height and thickness, as well as back/abdomen orientation.

One or both of the at least one detection units 220a-b associated with the first 210 and second 211 transport unit may further be configured for detecting one or more of: injuries, cuts or deviations, length, height, biomass, or gender.

The system according to the present invention further comprises an initial orientation unit 300 arranged movably over both the first 210 and second 211 transport units, at least movable over the overlapping parts of the first 210 and second 211 transport unit, and arranged a distance from the at least one detection unit 220a associated with the first transport unit 210, seen in longitudinal direction of the first transport unit 210, and a distance in front of/from the at least one detection unit 220b associated with the second transport unit 211, seen in longitudinal direction of the second transport unit 211. The initial orientation unit 300 is arranged moveable in transversal direction and longitudinal direction of the first 210 and second 211 transport units and further preferably also moveable in vertical direction in relation to the first 210 and second 211 transport units by controllable arms 310 and one or more motors 320.

The initial orientation unit 300 further comprises a retaining device 330 arranged to the arms 310 via a rotational interface/adapter 340.

The retaining device 330 according to the present invention is preferably a suction device arranged for providing an underpressure, which gently and safely will retain a fish to be moved from the first transport unit 210 and to the second transport unit 211 while at the same time as the respective fish is moved it is oriented with its longitudinal direction in transversal direction of the second transport unit 211 and with the nose/head in a desired direction.

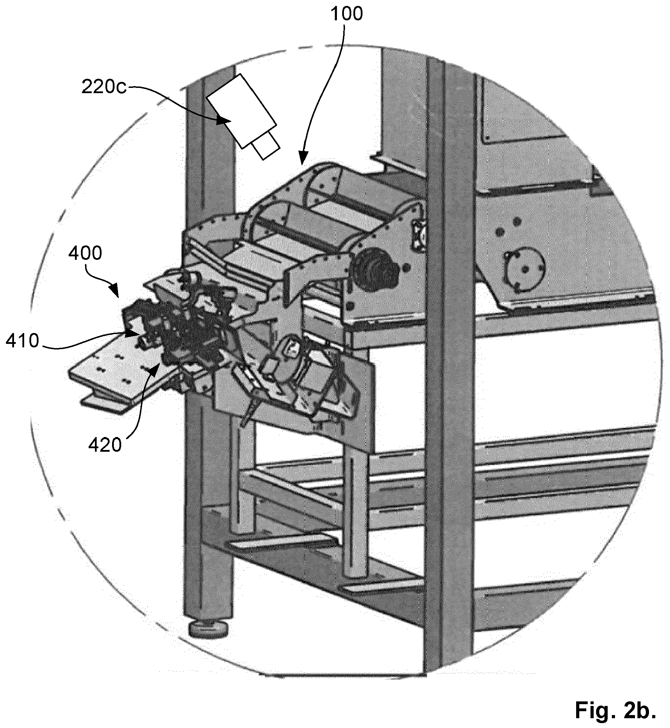

In accordance with a further embodiment of the system for automated vaccination according to the present invention, the system comprises at least one detection unit 220c (Fig. 2b) arranged to observe the respective fish in connection with the ABAOU 100. The at least one detection unit 220c associated with the ABAOU 100 is, e.g., similar as the described detection units 220a-b, and arranged to observe the respective fish at the feeder member 110 or in transit between the feeder member 110 and back/abdomen assembly 120. The at least one detection unit 220c associated with the ABAOU 100 is accordingly configured to observe the other side of the fish than the side observed by the at least one detection unit 220b associated with the second transport unit 211 by observing the fish after it has been turned by the feeder member 110 of the ABAOU 100. Accordingly, by arranging at least one detection unit 220c in connection with the ABAOU 100 this enables a two-side observation of the fish, i.e. the fish is observed from both sides, which will increase the amount of data/information of the respective fish, as well as improved data/information for vaccination.

The system according to the present invention further comprises at least one vaccination unit 400, as shown in further detail in Fig. 2b, arranged downstream the at least one ABAOU 100, the vaccination unit 400 being configured to receive back/abdomen orientated fish for vaccination from the ABAOU 100. The vaccination unit 400 comprises at least one retaining device 410, e.g., in the form of a suction device arranged for providing an underpressure, which gently and safely will retain a fish to the vaccination unit 400, and at least one injection unit 420 for injecting a vaccine in the retained fish.

The injection unit 420 includes a dosage needle (not shown) for injection of an amount of vaccine given by a dosage unit 421 (see Fig. 3), and preferably also means (not shown) for cleaning the dosage needle. The retaining device 410 and injection unit 420 can further be arranged for being positioned in longitudinal direction and for elevation, respectively, in relation to the vaccination unit 400.

The needle is preferably controlled continuously so that there is a continuous control whether the fish has been vaccinated or not. Control of the needle is for example based on an inductive transmitter which produces an approval signal if the needle point is there, or negative signal if it fails to find the needle tip. Control of the vaccine in the vaccination unit 400 is for example based on a pressure difference at the time of injection. The pressure difference is measured by means of for example a pressure gauge. At low pressure a signal is produced that the vaccine is not present. The needle is affected by an air pressure after each injection incident which during normal operation shall contribute to the needle being free from shell and other impurities. In case of needle breakage or insertion problems of the needle tip, the vaccination unit 400 is to be stopped from further vaccination and any fish present in the system is sorted for re-vaccination.

To enhance the vaccination speed of the at least one vaccination unit 400 there may be arranged one or more additional units or means between the ABAOU 100 and the at least one vaccination unit 400 providing a waiting area before the fish is supplied to the vaccination unit 400 to increase the capacity of the at least one vaccination unit 400.

Reference is now made to Fig. 3. The system according to the present invention further includes a control unit 500, configured for, by comprising means and/or software, analyzing/detecting/calculating, as well as documenting, the orientation of the fish on the first transport unit 210, based on information from the at least one detection unit 220a associated with the first transport unit 210.

The control unit 500 is further configured for, by comprising means and/or software, based on detected orientation, controlling the initial orientation unit 300 to move the fish from the first transport unit 210 to the second transport unit 211 as well as orienting the moved fish with its longitudinal direction in the transversal direction of the second transport unit 211 with the head/nose in a desired direction, by controlling the retaining device 330 to engage the fish in question and controlling the arms 310 and rotational interface/adapter 340 to reposition and orient the fish on the second transport unit 211.

The control unit 500 is further configured for, by comprising means and/or software, analyzing/detecting/calculating, as well as documenting, based on information from the at least one detection unit 220b associated with the second transport unit 211, the orientation of the fish on the second transport unit 211 and controlling the ABAOU 100 to arrange the fish in question in a desired back/abdomen orientation for the vaccination by the vaccination unit 400.

The control unit 500 is further configured for, by comprising means and/or software, analyzing/detecting/calculating, as well as documenting, based on information from the at least one detection unit 220b and/or 220a and/or 220c, one or more of: length (or fork length), height, injuries, biomass (theoretical weight), gender, injuries.

The control unit 500 is further configured for, by comprising means and/or software for, based on information from the mentioned detection unit(s) 220a-c, calculating or determining one or more of:
- injection coordinates for vaccination,
- injection depth of vaccination,
- dosage quantity.

The control unit 500 is further configured for, by comprising means and/or software, based on information from the detection unit(s) 220a-c, controlling the vaccination unit 400, hereunder the retaining device 410, injection unit 420 and dosage unit 421 as regards optimal injection point and optimal injection depth for performing the vaccination of the individual fish.

The vaccination unit 400 according to the present invention is arranged for single vaccination, poly-vaccination or muscular vaccination.

In accordance with a further embodiment of the system according to the present invention, there is arranged at least one sorting unit 600 (see Fig. 3) downstream the vaccination unit 400, configured to receive fish (vaccinated or not) from the vaccination unit 400 and sort the fish according to desired preferences. An example of a suitable sorting unit 600 is, e.g., described in NO 331843 B1 (in the name of the applicant), the disclosure of which is included herein by reference. Sorting is, e.g., based on length, height, biomass, gender or similar, as detected by at least one detection unit 220a-b associated with the second 211 and/or first 210 transport unit, and at least one detection unit 220c associated with the ABAOU 100. The at least one sorting unit 600 may be associated with a separate control unit (not shown) or the control unit 500 is configured for, by comprising means and/or software, to control the sorting unit 600 based on e.g. length, height, biomass, gender or similar. The sorting may also be based on sorting out unwanted, unvaccinated or undetectable fish.

According to a further embodiment of the system according to the present invention, the initial orientation unit 300 in addition is configured for sorting out fish that is not to be vaccinated. The control unit 500 is for this configured for, by comprising means and/or software, to control the initial orientation unit 300, based on information from the at least one detection unit 220a associated with the first transport unit 210, to move fish that is not to be vaccinated to a sorting line, receiving unit or similar (not shown). Sorting criteria is, e.g., injuries or deviations, such as gill cover, humpback, pinching injuries etc., or based on length, height. The sorting may also be based on other criteria for unwanted fish, as well as undetectable fish.

In addition to the points and actions mentioned above, the system is arranged to be coordinated against the origin of the fish, i.e. from which fish container, batch etc., the fish was introduced into the system for vaccination.

In this way it is provided a system for detection/recognition, vaccination, sorting (if desired) and documentation of fish.

Preferably, the information/data generated also provides information about biomass (theoretical weight) for fish that is vaccinated, and preferably also percentage portion of injuries etc. of vaccinated/sorted fish, unvaccinated/out-sorted fish.

The theoretical weight, i.e. the biomass, is a calculation based on fork length and height of the fish, but also the fish thickness or length can be a relevant parameter. The measurement parameters of the fish, i.e. length (or fork length), height and thickness, provide together a proper picture of the fish biomass (weight).

According to a further embodiment of the system according to the present invention, the control unit 500 is configured, by comprising means and/or software, to control the speed of the first transport unit 210 depending on how large amount of fish being supplied, based on information from means 700 for supplying fish to the first transport unit 210. The control unit 500 may further be configured to, by comprising means and/or software, control the amount of fish being supplied to the first transport unit 210 by controlling the means 700 for supplying fish to the first transport unit 210, so that there is not supplied more fish than the initial orientation unit 300, ABAOU 100 and vaccination unit 400 can process.

Even though it above is described a solution where the system only comprises one of the respective components/units 210-211, 220a-c, 300, 100, 400, 500, 600, 700, the system according to the present invention can comprise multiple of these components/units 210-211, 220a-c, 300, 100, 400, 500, 600, 700 arranged in one or more parallel lines of the system.

### Modifications

The detection unit(s) for acquiring information may include different types of cameras, color or black and white, possibly lasers, x-ray, ultrasound, NIR (Near Infrared Spectroscopy), etc.

The system and method according to the invention can be adapted to detect/determine fat, protein and water content of the fish.

The detection/evaluation may, as mentioned above, be conducted whereas the fish is transported and in combination with other information collection. The content information can be performed by using NIR or similar.

The fish supplied to the transport unit is preferably anaesthetized, but the system may also include means for anaesthetizing fish arranged upstream the first transport unit.

The system according to the present invention may be upgraded for more accurate information by providing a second camera, for example, a 2D camera, arranged side by side with the illumination source, for providing information about other parameters of the fish. In this way more accurate information of the respective fish may be acquired.

The system according to the invention can further be adapted for marking the individual fish, either through insertion of a physical marking or by ID chips, or by taking samples for DNA. The system can also be adapted to read ID chips for storing of data. These data can also be used in connection with sorting or stored in databases for further processing.

The system can be provided with means for supply of fish to the first transport unit adapted for supplying fish mainly singularized and/or oriented head/tail mainly in the longitudinal direction/direction of movement of the first transport unit. Examples of such means can be found in NO NO342304 B1 and NO331843 B1, in the name of the applicant, the content of both included herein by reference.

The initial orientation unit can further be provided with means for accurate positioning in relation to the respective fish, such as camera, laser or similar, increasing the accuracy of engagement with a desired fish.

The system according to the present invention can further be configured for using machine learning. By means of machine learning one can make predictions or calculations based on large amounts of data. Machine learning can be divided in several methods, which is known as, e.g., supervised learning, unsupervised learning, semi-supervised learning and reinforcement learning that enable different approaches for processing of the acquired data/information depending on the result to be achieved. Accordingly, by providing the control unit with means and/or software for machine learning, the acquired data/information from the detection units, the acquired data/information can be processed to find patterns, trends and relationships, which can be used to improve the accuracy of the vaccination and sorting, if present, as well as the observation of the fishes.

## Claims

1. Active back/abdomen orientation unit (100) for anesthetized fish comprising a rotating back/abdomen orientation assembly (120), wherein the rotating back/abdomen orientation assembly (120) comprises first (130) and second (140) rotating orientation members arranged about a common rotation axis and independently rotatable about the common rotation axis, **characterized in that**
the first (130) and second (140) rotating orientation members comprise a number of respective longitudinally extending structure members (161a-b) arranged perpendicularly to a respective disc (160a-b) at one end thereof and distributed in circumferential direction of the respective disc (160a-b) forming at least one receiving space (170) for fish to be actively back/abdomen oriented,
wherein the first (130) and second (140) rotating orienting members are arranged laterally inversed to the common rotation axis without the structure members (161a-b) of the respective rotating orientation members (130, 140) being in contact with the respective disc (160a-b) of the other rotating orientation member (130, 140).

2. Active back/abdomen orientation unit (100) according to claim 1, wherein the mentioned structure members (161a-b) of the first (130) and second (140) rotating orientation member are arranged alternating about the common rotation axis such that adjoining structure members (161a-b) of the rotating orientation members (130, 140) form the at least one receiving space (170).

3. Active back/abdomen orientation unit (100) according to claim 1, wherein comprising an independently controllable rotating feeder member (110) arranged upstream the mentioned rotating back/abdomen orientation assembly (120), wherein the rotating feeder member (110) comprises at least one receiving space (111) for receiving an anesthetized fish and controlled feeding of received fish to the rotating back/abdomen orientation assembly (120).

4. Active back/abdomen orientation unit (100) according to claim 1, wherein the rotating feeder member (110) comprises a number of structure members (115) arranged to respective discs (114a-b) at ends thereof and distributed in circumferential direction thereof.

5. Active back/abdomen orientation unit (100) according to claim 3, wherein the rotating feeder member (110) and rotating back/abdomen orientation assembly (120) are arranged to a support structure (150) with parallel rotation axes, wherein the rotation axis of the rotating feeder member (110) is at an elevated plane in relation to the common rotation axis of the rotating back/abdomen orientation assembly (110).

6. System for automated vaccination of anesthetized fish, said system comprising at least one transport unit (210, 211) for transport of fish past at least one detection unit (220a-b) acquiring information about each transported fish, and at least one vaccination unit (400), **characterized in that** the system comprises an active back/abdomen orientation unit (100) arranged upstream the vaccination unit (400) supplying the vaccination unit (400) with fish with a confirmed desired back/abdomen orientation.

7. System for automated vaccination according to claim 6, wherein the system comprising a first transport unit (210) configured to receive anesthetized fish at one end thereof, and a second transport unit (211) arranged in a parallel longitudinal plane and wherein the first (210) and second (211) transport unit partly overlap at the second end of the first transport unit (210), and wherein the active back/abdomen orientation unit (100) is arranged downstream the second transport unit (211).

8. System for automated vaccination according to claim 6, wherein at least one detection unit (220a-b) is associated with each of the transport units (210, 211) to acquire information of fish transported on the respective transport unit (210, 211).

9. System for automated vaccination according to claims 7-8, wherein the system comprising an initial orientation unit (300) configured to move fish from the first transport unit (210) to the second transport unit (211) as well as orienting the moved fish with its longitudinal direction in transversal direction of the second transport unit (211) with the head/nose in a desired direction.

10. System for automated vaccination according to claim 6, wherein the rotating back/abdomen orientation assembly (120) comprises first (130) and second (140) rotating orientation members arranged about a common rotation axis and independently rotatable about the common rotation axis, wherein at least one receiving space (170) for fish to be back/abdomen oriented is formed by structure members (161a-b) of the first (130) and second (140) rotating orientation members.

11. System for automated vaccination according to claim 10, wherein the first (130) and second (140) rotating orientation members comprises a number of respective longitudinally extending structure members (161a-b) arranged perpendicularly to a respective disc (160a-b) at one end thereof and distributed in circumferential direction of the respective disc (160a-b), wherein the first (130) and second (140) rotating orientation members are arranged laterally inversed to the common rotation axis without the structure members (161a-b) of the respective rotating orientation members (130, 140) being in contact with the respective disc (160a-b) of the other rotating orientation member (130, 140).

12. System for automated vaccination according to claim 11, wherein the mentioned structure members (161a-b) of the first (130) and second (140) rotating orientation member are arranged alternating about the common rotation axis such that adjoining structure members (161a-b) of the rotating orientation members (130, 140) form the at least one receiving space (170).

13. System for automated vaccination according to claim 10, wherein the active back/abdomen orientation unit (100) comprising an independently controllable rotating feeder member (110) arranged upstream the mentioned rotating back/abdomen orientation assembly (120), wherein the rotating feeder member (110) comprises at least one receiving space (111) for receiving an anesthetized fish and controlled feeding of the received fish to the rotating back/abdomen orientation assembly (120).

14. System for automated vaccination according to claim 13, wherein the rotating feeder member (110) comprises a number of structure members (115) arranged to respective discs (114a-b) at ends thereof and distributed in circumferential direction thereof.

15. System for automated vaccination according to any preceding claim 10-14, wherein the rotating feeder member (110) and rotating back/abdomen orientation assembly (120) are arranged to a support structure (150) with parallel rotation axes, wherein the rotation axis of the rotating feeder member (110) is at an elevated plane in relation to the common rotation axis of the rotating back/abdomen orientation assembly (120).

16. System for automated vaccination according to claim 13, wherein at least one detection unit (220c) is associated with the active back/abdomen orientation unit (100), configured to observe the fish from the other side than the side observed by the at least one detection unit (220b) associated with the second transport unit (211).
